# EUROPEAN PATENT APPLICATION

(11) **EP 0 585 133 A1**
(43) Date of publication of application: **02.03.1994**
(21) Application number: 93306794.4
(22) Date of filing: 26.08.1993
(51) Int. Cl.: F24F 11/00, G05D 23/19

(54) **A control system**

(30) Priority: 26.08.1992 DE 9211453 U; 13.11.1992 DE 4238342
(71) Applicant: COLT INTERNATIONAL HOLDINGS A.G., CH-6340 Walterswil/Baar (CH)
(72) Inventor: De Kruijff, Gerdinus Hendrikus, NL-6602 WN Wijchen (NL)
(74) Representative: Greenwood, John David

(57) **Abstract**

A control system for a heating and ventilation system comprises a central controller (C) connected by a data bus (18) to a number of priority sub-stations (2). Each priority sub-station (2) is associated with a number of further sub-stations (3-5) to form two or more groups of sub-stations (A,B). Each sub-station (2-5) includes controllers which receive information from sensors and output control information to heating and ventilation elements (1). The priority sub-stations (2) can effect control of the sub-stations within its group independently of the central controller (C) thereby obviating the need for passing control information between the central controller (C) and all the sub-stations (2-5). This provides a control system which is readily expandable by the addition of new sub-stations to a group or new groups of sub-controllers thereby providing a more flexible planning and a more adaptable control system.

## Description

This invention relates to a control system including a plurality of controllers each having at least one input connection for receiving sensor information from a measuring sensor and at least one output connection for outputting control information, the controllers being associated with sub-stations in that each sub-station comprises one or more of the controllers.

Such control systems are generally applicable in the industrial field and in particular to the control of complex heating and ventilation systems which have a number of individual appliances which cooperate with one another, the individual units often needing to be differently controlled. Where the heating of large area workshops is concerned, for example, individual units in areas to which outside air has access, perhaps through gates and other apertures, require to be adjusted differently from those in more protected areas. The supply of air and the extraction of used air regularly have to be forced in areas which are subject to pronounced dust emission or marked air consumption. A heat-saving recirculating arrangement, for example featuring extraction of hot air accumulating in the ceiling areas and demand-adapted recycling of this air, requires separate controlling of individual units. Furthermore, the extraction of air and the opening of vents in the case of fire, the closure of ceiling apertures in case of rain and operating such an installation on a time-control basis adapted to different operating times, may well be necessary.

Known control systems for controlling a large number of appliances have utilised central controllers. In a central controller various measured values are correlated and, taking into account the working time, processed to provide differentiated control commands which have been delivered to the individual units via sub-stations. It has been possible for the sub-stations to be of correspondingly simple construction and for them to embody the control circuitry needed to convert the signals into an appropriate control command for the individual unit in question.

US 5,130,391 describes a single sub-station having four controllers each coupled to a physical parameter sensor and connected to an appliance to be controlled.

German patent application 3,124,966 discloses a control system where a number of sub-stations are controlled from a central controller.

Such centralised control systems have been found to be rather inflexible. Conducting the measured signals and the command signals to and from a central controller is complicated from both the signal point of view and also in terms of wiring and it makes the system difficult and awkward to change. Further, the concept of such a central control arrangement calls for considerable expense at the planning and trials stages. Finally, there is also a risk of total failure in the event of defects in the region of the measuring sensors or of the central controller.

Accordingly, it is an object of the present invention to provide an improved control system which is more adaptable.

In accordance with the present invention this problem is resolved by a control system in accordance with the preamble of claim 1 characterised in that there are at least two groups of sub-stations, the sub-stations of each group being interconnected to permit data transfer between the sub-stations of the respective group; one sub-station of each group is a priority sub-station and is connected to receive control signals from a central controller; and the sub-stations are controllable by a priority sub-station.

A sub-station comprising a plurality of controllers in which each controller has an input connection for a measuring sensor and an output connection for a positioning a control member can generally control the functions of an individual unit of a heating and ventilation system, for example, on an economically self-sufficient basis - at least to an extent which guarantees a basic function and avoids total failure in the case of breakdowns outside the sub-station, possibly in the region of some central installation. However, where this safety consideration is concerned, it is above all advantageous that "in situ" and total control is possible.

A sub-station may be in a position to perceive an increased emission of dust and/or heat, possibly via a measuring sensor, and then, via output stages of an associated blower motor, the associated vent aperture and/or vent orientation, operate an extraction device as required. Similarly, a sub-station is able to deal with a localised demand for heat by calling up heated supply air and/or switching on or activating heating radiators. The advantage of direct and independent control functions is demonstrated also by the example of a sealing ventilator which has to be closed when rain enters and which is controlled by a "short cut", through the associated substation and not first via a central station, which would be a roundabout route.

Preferably the priority sub-stations and the central controller are connected to each other by a data bus.

The data bus connecting the central controller to the priority sub-stations can also be used to interlink the sub-stations of a given group but it is more preferable with the present invention that the sub-stations within each group are interconnected by separate data buses.

A sub-station, or group of sub-stations, may be arranged to be suitable for working entirely in isolation. This may be temporary in the case of a breakdown but may also be a desirable long-term solution in some circumstances. To this end, the priority sub-station may be provided with an operating panel, and conveniently a display panel which render appropriate manual adjustment, or programming, and monitoring possible. This provides the possibility of local control of one or a group of substations independently of control by the central controller.

A priority sub-station can take over a guidance role delivering control commands to other sub-stations in its group whether by passing on data commands from the central controller or from commands generated by, or manually input into the control panel of, the priority sub-station itself. The sub-stations within a group can thus be controlled in a coordinated manner to take into account the reciprocal influences exerted by units on the system.

Ideally, sub-stations of the present invention are provided with an output connection to pass on measured values or in some cases central command values. Within the framework of the high flexibility desired, any desired values can be passed on. For example, in contrast to the "normal" operating mode, a sub-station which does not otherwise have management tasks vis-a-vis connected substations, is able to emit important signals, for example in the event of a fire. Such an alarm signal may be passed on to the priority sub-station on detection of a fire and processed by that sub-station to either generate physical alarms or to pass the alarm signal back to the central controller for appropriate action to be taken.

The use of the preferred arrangement of data buses to connect the various sub-stations to each other and the priority sub-stations to the central controller allow a reduction in the wiring necessary to carry the various signals throughout the control system. Such a wiring system permits expansion in a very simple way by the simple expedient of attaching further sub-stations to the data bus whilst requiring an over-proportional increase in wire interconnections. Such data buses are well known and their configuration and mode of operation will not be described in any detail in this application.

An embodiment of a control system according to the present invention will now be described, by way of example only, with reference to the accompanying drawings in which:
Figure 1 is a schematic diagram of a control system according to the present invention used to control a heating and ventilation plant; and
Figure 2 is a schematic diagram of a priority substation and an associated other sub-station of the embodiment of Figure 1.

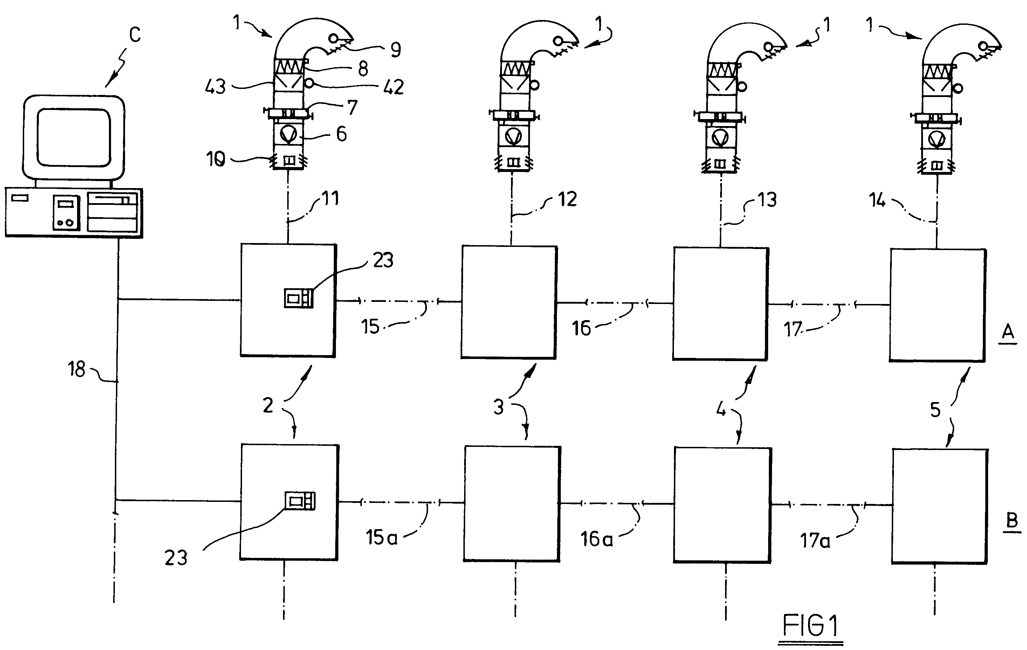

Figure 1 shows a control system for controlling ventilation units 1 in an industrial heating and ventilation system. A specific range of sensors and control mechanisms will be described in relation to this embodiment but it will be appreciated that a large number of different appliances may be controlled in relation to other sensed parameters by a control system according to the present invention. For example, the ventilation and heating system may include different means of energy generation, the control of doors, wall and ceiling ventilators and fans, and sensors to measure environmental parameters and individual appliance settings relevant to the system being controlled. For reasons for clarity only four ventilation units 1 are illustrated in Figure 1.

Associated with each of the ventilation units 1 is a respective sub-station 2, 3, 4 or 5 of a group of substations of which the sub-stations 3, 4 or 5 are of identical construction whereas the sub-station 2 is a priority sub-station configured differently from the other sub-stations.

The sub-stations are divided into a series of groups of which two groups, namely A and B, are illustrated. The sub-stations within each of the groups A and B are shown for simplicity as being made up of identical sub-stations with sub-stations in each group being given the same reference numerals. In practice the different groups may have different numbers of sub-stations each with different units being controlled to accord to the areas being controlled by the control system.

Each priority sub-station 2 is in a position to control independently an associated ventilation unit 1. The sub-stations 3, 4, 5 in the groups of sub-stations A and B are controlled via the priority sub-station 2.

Each of the ventilation units 1 comprises a motor-driven fan 6, a controllable heating unit 7, a filter insert 8, inlet ventilation flaps 9 and outlet ventilation flaps 10, which may in the most general case be of controllable design. As a rule, the fan motor 6 can be at least stepwisely controlled and the heating unit 7 may be valve-controlled so that there are already two independent control functions which can be perceived by the associated sub-stations 2, 3, 4 or 5.

In response to these control functions, external influence is possible in accordance with any desired relationship of one to another, according to a time-controlled mode of operation adapted to a daily and weekly working cycle and in particular for coordinated control in response to special circumstances such as fire, high emission levels, rain or frost. For this purpose in addition to the connections required already for control purposes between the ventilation unit 1 and the associated sub-stations (namely connections 11, 12, 13 and 14 shown by dash-dotted lines in the drawings) there are also provided connections 15, 16 and 17.

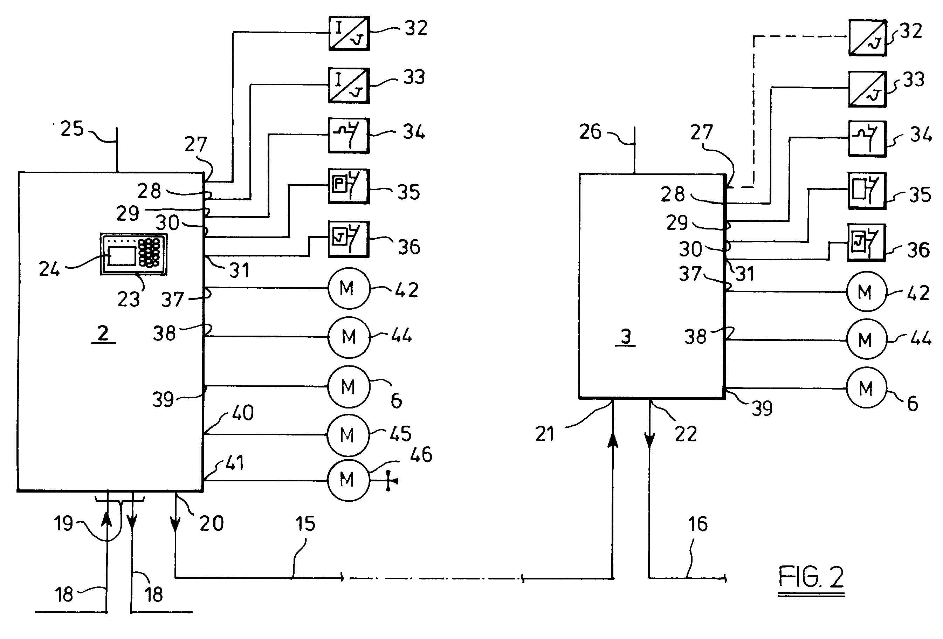

Further details are shown in Figure 2 in which, on the grounds of clarity, only the sub-stations 2 and 3 (enlarged) are shown. It is readily obvious that the substations 2 and 3 are not of identical constructions. The priority sub-station 2 is connected by an input connection 19 to the data bus line 18 which connects it to a central station C. The data bus line 18 is of a type such that the signals are received on the principle of one-way signal flow, are possibly regenerated internally and are passed on through a separate connection. Therefore, the priority sub-stations 2 are connected directly to the central station C, in contrast to the sub-stations 3, 4 and 5.

The priority sub-station 2 outputs signals via an output connection 20 to the input connection 21 on the substation 3 which passes the signals via an output connection 22 to the line 16 leading to the sub-station 4. In this way, the sub-stations 3, 4 and 5 are "attached" to the sub-station 2. The priority sub-station 2 comprises an operating part 23 with a display part 24 so that it is possible to input desired operating values and operating programmes for all four ventilation units 1 - consequently, individual control becomes unnecessary. The operating part 23 also contains a time-switch function (not shown) which can be programmed via the operating part 23.

Each of the sub-stations 2 to 5 has a mains connection 25, 26 and internally an associated mains part for independent voltage supply. The sub-station 2 comprises five input connections 27, 28, 29, 30 and 31 of which the connection 27 is provided for a room sensor 32 for measuring the temperature in the room. The connection 28 is intended for a sensor 33 for measuring the temperature of the expelled air. The connection 29 constitutes an input connection for a motor thermocontact 34. A filter governor 35 is connected via the input connection 30 and a frost-protective thermostat 36 via the input connection 31. Furthermore, the sub-station 2 has output connections 37, 38, 39, 40 and 41 so that a servomotor 42 for the air mixing valve 43 (see Fig. 1), a servomotor 44 for a closure vent in the ventilation unit 1, the fan motor 6, a pump 45 in the hot water circuit for the heating units 7 and a heating circuit valve 46 can all be controlled.

The appropriate connections are identified by the same reference numerals in the case of the sub-station 3, in order to simplify illustration and comparison. The connection from the input connection 27 to the room temperature measuring sensor 32 of the sub-station 3 is shown by broken lines as it is in some cases optional. In such cases, it may be sufficient for one single measuring sensor, for example sensor 32 of the sub-station 4, to service the entire group of four ventilating units 1. This measured signal or a signal derived from it may be picked up and passed on to the sub-station 2.

Also in the area of output connections, reductions are achieved in that the sub-station 3 does not generate any output commands to the pump or the heating circuit valve for the heating units 7, this being the sole responsibility of the priority sub-station 2.

From the embodiment illustrated, it is evident from the simple case of a group of ventilation units that in the planning and installation of such a group of appliances, together with the associated sub-stations, very simple control possibilities are available by virtue of the fact that these sub-stations are in themselves so equipped that they can take over essential functions for basic operation while at the same time they are capable of receiving central control commands directly or through a priority sub-station and of working together with one another. Of particular interest in this respect are the connecting line connections and internal receiver and transmitter circuits which permit of digital processing and transmission so that the simple concept of data bus lines can be implemented. This is achievable in well known fashion.

The control system of the present invention is applicable to systems other than environmental control systems described in relation to illustrated embodiment of the invention.

## Claims

1. A control system including a plurality of controllers each having at least one input connection (27-31) for receiving sensor information from a measuring sensor (32-36) and at least one output connection 37-41) for outputting control information, the controllers being associated with sub-stations (2-5) in that each sub-station (2-5) comprises one or more of the controllers, the control system being characterised in that:
there are at least two groups of sub-stations (A,B), the sub-stations (2-5) of each group (A,B) being interconnected to permit data transfer between the substations (2-5) of the respective group (A,B);
one sub-station (2) of each group (A,B) is a priority sub-station (2) and is connected to receive control signals from a central controller (C); and
the sub-stations (2-5) are controllable by a priority sub-station (2).

2. A control system as claimed in claim 1, in which the priority sub-stations (2) and the central controller (C) are connected to each other by a data bus (18).

3. A control system as claimed in either one of claims 1 and 2, in which the sub-stations (2-5) of a group of sub-stations are interconnected by separate data buses (15-17, 15A-17A).

4. A control system as claimed in any preceding claim in which at least one of the priority sub-stations (2) include means for inputting control commands independently of the central controller (C).

5. A control system as claimed in any preceding claim in which at least one of the priority sub-stations (2) includes a display means (24) for displaying control data.

6. A control system as claimed in any preceding claim in which at least one of the priority sub-stations (2) includes means (23) for inputting control instructions.

7. A control system as claimed in any preceding claim in which a sub-station (2) of a group of sub-stations (2-5) is arranged to pass some sensor information to at least one of the other sub-stations (3-5) of the group of sub-stations (2-5).

8. A control system as claimed in any preceding claim in which the controllers control elements of a heating and ventilation system (1).

9. A control system as claimed in any preceding claim in which one of the sub-stations (2-5) includes a fire monitor and is arranged to pass an alarm signal to its associated priority sub-station (2) on detecting a fire.

10. A control system as claimed in any preceding claim in which the priority sub-stations (2-5) are arranged to pass on information obtained by the sub-stations in the associated group of sub-stations to the central controller (C).
